# FASCICULE DE BREVET EUROPEEN

(11) **EP 0 654 633 B1**
(45) Date de publication et mention de la délivrance du brevet: **29.04.1998**
(21) Numéro de dépôt: 94440067.0
(22) Date de dépôt: 24.10.1994
(51) Int. Cl.: F17C 13/08, B62B 1/12

(54) **Réservoir, en particulier, bouteille à gaz**
Reservoir, insbesondere Gasbehälter
Reservoir, in particular gas bottle

(30) Priorité: 22.11.1993 FR 9314077
(43) Date de publication de la demande: 24.05.1995
(73) Titulaire: SCHNEIDER INDUSTRIE S.I. Société Anonyme dite :, 67240 Bischwiller (FR)
(72) Inventeur: Wendling, Jean, F-67410 Drusenheim (FR)
(74) Mandataire: Rhein, Alain

(56) Documents cités:
- FR-A- 2 538 688
- FR-A- 2 662 233
- US-A- 4 773 123

## Description

L'invention a trait à un réservoir, en particulier une bouteille à gaz comprenant, dans sa partie inférieure, une assise autorisant son maintien en position stable au sol, voir par exemple FR-A-2 662 233.

La présente invention concerne tout particulièrement l'industrie spécialisée dans la conception de réservoirs, notamment métalliques et transportables, destinés à contenir divers produits et, plus spécifiquement du gaz sous forme liquéfié.

Les réservoirs, du type bouteille à gaz, présentent, à l'heure actuelle une enveloppe métallique souvent conçue au moyen de deux demi-coquilles assemblées par soudure. Dans sa partie supérieure, cette bouteille à gaz comporte des moyens de réception d'un robinet et/ou d'un détendeur, tandis qu'au niveau de sa partie inférieure, elle est munie d'une assise, habituellement sous forme d'un rebord annulaire autorisant le maintien en position stable du réservoir sur le sol.

Ce rebord annulaire, formant l'assise, peut être soudé sur le fond de l'enveloppe métallique ou encore faire partie intégrante d'un habillage complet, en matériau synthétique enveloppant la bouteille à gaz de manière à la protéger contre les chocs et, en général, contre toute agression extérieure. Plus précisément, dans de telles conditions, cet habillage s'étend sous la bouteille tout en définissant un rebord annulaire de bonne résistance mécanique.

Il se peut, également, que ce rebord annulaire ne corresponde qu'à un prolongement de la virole définissant la partie cylindrique d'une telle bouteille à gaz.

Le transport de ces bouteilles s'effectue au moyen d'une poignée équipant la partie supérieure de la bouteille et permettant de soulever celle-ci. Ainsi, cette poignée peut être rapportée sur le capuchon protecteur susceptible d'être vissé sur la partie supérieure de la bouteille à gaz tout en protégeant le robinet détendeur. En cas d'habillage en matériau synthétique, celui-ci peut, tout comme au niveau de la partie inférieure, être prolongé dans sa partie supérieure de manière à définir un rebord annulaire présentant des ouvertures facilitant la préhension de la bouteille.

Dans tous les cas, le déplacement d'une telle bouteille à gaz ne peut se faire qu'en la soulevant, de sorte que l'usager en supporte tout le poids. Or, il est évident qu'en raison de leur conception en métal et dans le cas où elles sont pleines, le poids de telles bouteilles à gaz est non négligeable, sans compter que certains usagers, tels que des personnes âgées, sont dans l'impossibilité totale de transporter un tel poids.

Aussi, pour déplacer ces bouteilles à gaz sur une certaine distance, il est habituel d'utiliser des moyens de transport du type chariot, caddie ou analogue. Il s'agit, donc, d'ustensiles auxiliaires qu'il faut avoir à portée de main et qu'il convient, éventuellement, de pouvoir transporter dans une voiture. Finalement, ces moyens de transport auxiliaires représentent un encombrement supplémentaire une fois la bouteille à gaz disposée sur son lieu d'utilisation.

En fait, la présente invention a pour but de remédier aux inconvénients précités en permettant le transport aisé d'une bouteille sans qu'il ne soit nécessaire de soulever celle-ci intégralement et d'en supporter le poids total.

A cet effet, l'invention concerne un réservoir, en particulier, une bouteille à gaz, comprenant, dans sa partie inférieure, une assise autorisant son maintien en position stable au sol, caractérisé par le fait qu'il comporte au niveau de cette assise, des moyens de roulement rétractables qui, en position sortie, facilitent le déplacement dudit réservoir et, en position rétractée, permettent à nouveau à ce dernier de reposer au sol de manière stable par l'intermédiaire de ladite assise.

Selon une autre caractéristique de l'invention, le réservoir comporte des moyens de commande à distance pour assurer la sortie et/ou le retrait des moyens de roulement rétractables.

Selon l'invention, ce réservoir peut être muni, également, de moyens de préhension à bras de levier de nature escamotable au niveau de la partie supérieure du réservoir.

Selon une particularité de l'invention, les moyens de préhension à bras de levier constituent l'organe de commande des moyens de commande à distance de la sortie et du retrait des moyens de roulement rétractables.

Les avantages obtenus grâce à cette invention consistent, essentiellement, en ce que, disposant de moyens de roulement directement sur le réservoir, du type bouteille à gaz, l'usager n'est plus dans l'obligation de soulever, totalement, ce dernier pour le déplacer d'un endroit à un autre. De plus, au travers de moyens de commande à distance, cet usager peut aisément actionner ces moyens de roulement, afin de les rendre actifs ou de les ramener en position rétractée, ceci sans se baisser et, dans tous les cas, sans avoir à intervenir au niveau du dessous de la bouteille.

Finalement, la présence de moyens de préhension à bras de levier, facilite le déplacement du réservoir, puisque, là encore, le léger basculement à communiquer à celui-ci pour le ramener sur ses moyens de roulement rétractables est à la portée de tout usager.

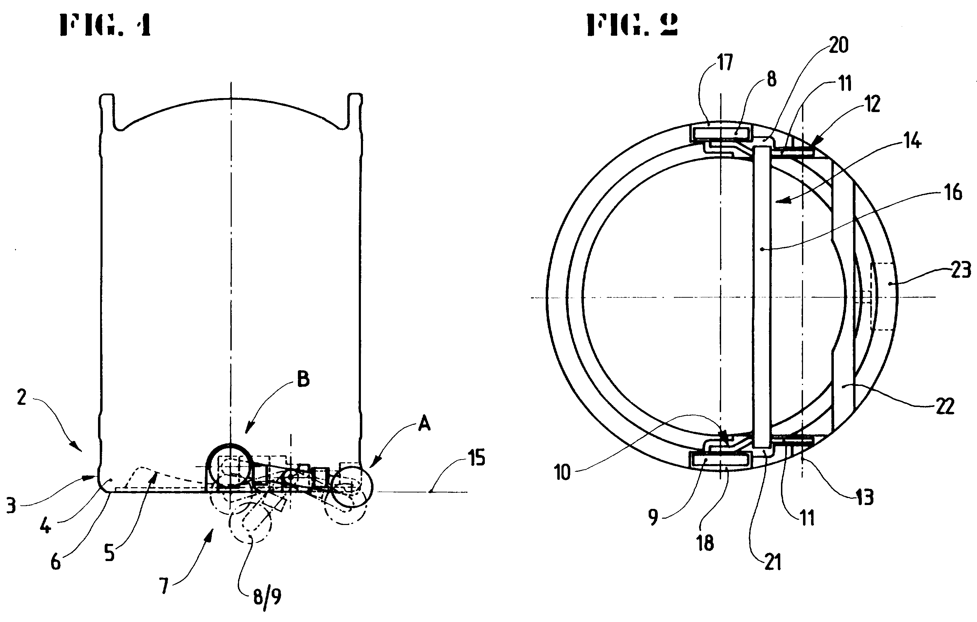

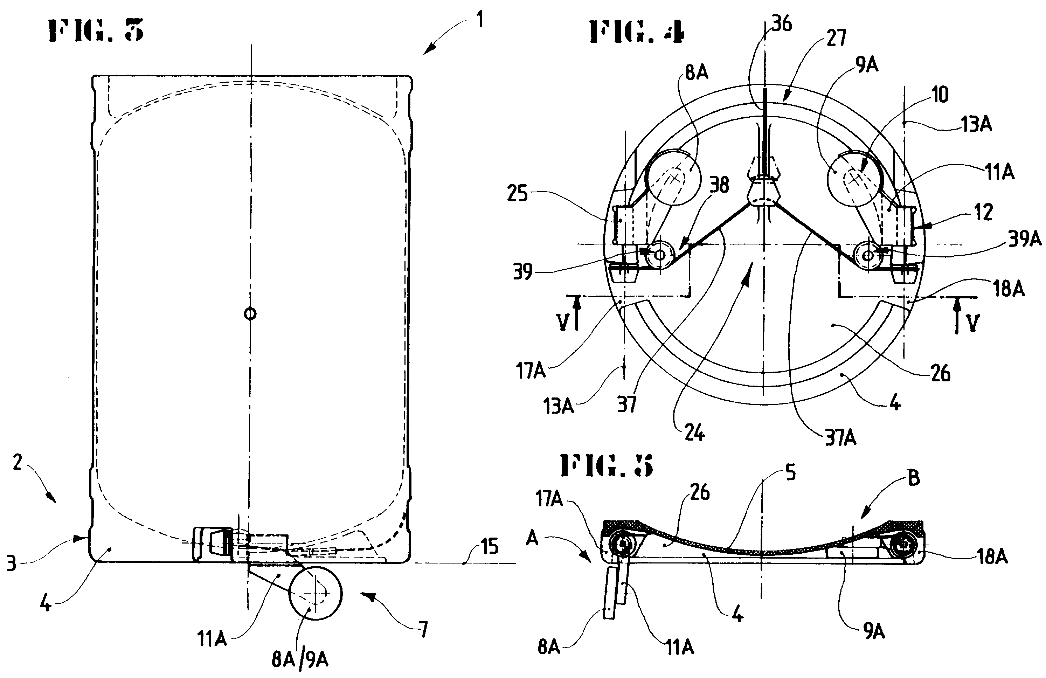

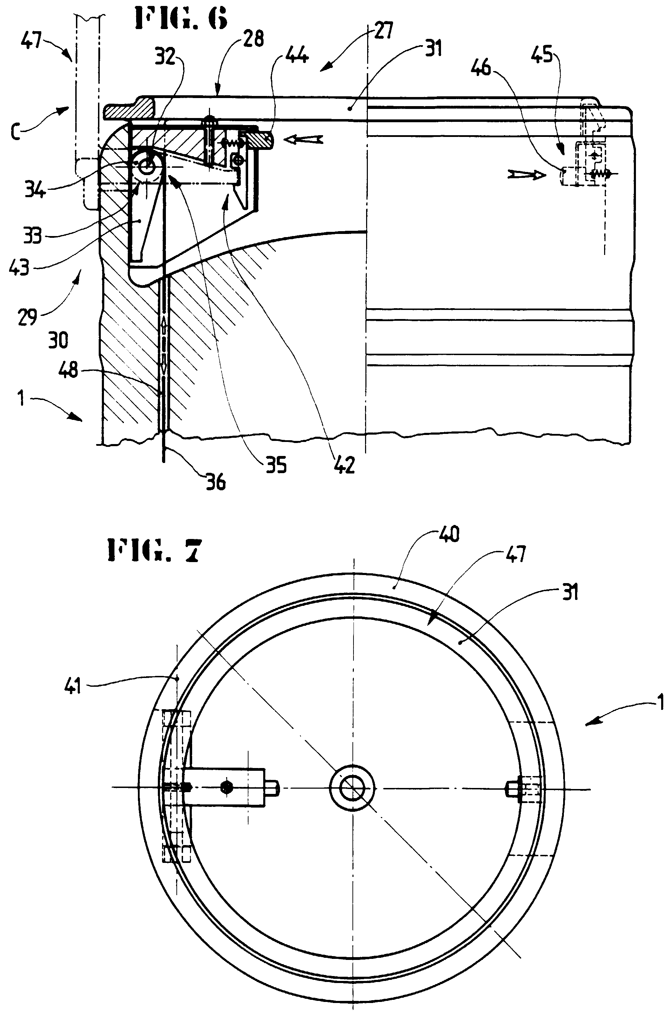

L'invention est exposée ci-après plus en détail à l'aide de dessins représentant seulement des exemples d'exécution.
. la figure 1 est une vue schématisée d'un réservoir, du type bouteille à gaz, conforme à l'invention et comportant des moyens de roulement rétractables ;
. la figure 2 est une vue schématisée et de dessous du réservoir représenté dans la figure 1 ;
. la figure 3 est une vue analogue à la figure 1 et illustrant des moyens de roulement rétractables selon un second mode de réalisation ;
. la figure 4 est une vue schématisée de dessous de la figure 3 ;
. la figure 5 est une vue en coupe selon V-V de la figure 4 ;
. la figure 6 est une vue schématisée et en coupe partielle de la partie supérieure d'une bouteille à gaz recevant des moyens de préhension à bras de levier constituant, en outre, l'organe de commande des moyens de commande à distance de la sortie ou du retrait des moyens de roulement rétractables ;
. la figure 7 est une vue schématisée de dessus de la figure 6.

La présente invention, telle que représentée dans les différents dessins joints en annexe, concerne un réservoir 1 en particulier du type bouteille à gaz.

Un tel réservoir 1 présente, généralement, une enveloppe métallique comportant, éventuellement, un habillage extérieur, par exemple, en matière synthétique. Les dessins illustrent des réservoirs correspondants, plus particulièrement, à ce type de réalisation avec habillage extérieur. Toutefois, l'invention n'est nullement limitée à de tels modes de réalisation puisqu'elle peut également concerner les réservoirs, du type bouteille à gaz, standard, ne comportant que leur seule enveloppe métallique.

D'ailleurs, dans tous les cas de figure, ces réservoirs ou bouteilles à gaz comportent, au niveau de leur partie inférieure 2, une assise 3 autorisant leur maintien en position stable au sol. Une telle assise 3, tout particulièrement, dans le cadre des bouteilles à gaz, emprunte, fréquemment, la forme d'un rebord annulaire 4 s'étendant au-dessous du fond 5 du réservoir 1. A titre d'exemple, ce rebord annulaire 4 peut être soudé, directement, sur le fond 5 de l'enveloppe métallique constituant le réservoir 1. Il se peut, également, tel que représenté dans certaines des figures des dessins ci-joints, que ce rebord annulaire 4 corresponde à un prolongement, dans la partie inférieure 2 du réservoir 1 de l'habillage en matière synthétique que reçoit ce dernier, ou encore de la virole définissant sa paroi cylindrique.

C'est en fait, au travers du chant inférieur 6 du rebord annulaire 4 que le réservoir 1 repose au sol.

Selon l'invention, ledit réservoir 1 comporte, également au niveau de son assise 3, des moyens de roulement rétractables 7 qui, en position sortie telle que repérée A sur les figures 1, 3 et 5, ont pour but de faciliter le déplacement dudit réservoir 1, tandis qu'en position rétractée B ces moyens de roulement 7 viennent, précisément, s'effacer au niveau de l'assise 3 de manière à autoriser, à nouveau, au réservoir 1, de reposer au sol de manière stable par l'intermédiaire de cette assise 3.

Les figures 1 et 2 concernent un premier mode de réalisation de ces moyens de roulement rétractables 7, tandis que les figures 3 à 5 et, accessoirement 6 à 7, correspondent à un second mode de réalisation.

Ainsi, selon le premier mode de réalisation correspondant aux figures 1 et 2, les moyens de roulement rétractables 7 se présentent sous forme de roulettes 8, 9, préférentiellement au nombre de deux au moins pour une question de stabilité bien qu'une solution avec une roulette serait envisageable. Cette ou ces roulettes 8, 9 sont montées en rotation autour d'un axe horizontal sur l'extrémité 10 d'un bras support 11 lui-même monté pivotant à son extrémité opposée 12, sur la partie inférieure 2 du réservoir 1. Dans le cadre de ce mode de réalisation, l'axe de rotation d'une roulette 8, 9 est parallèle à l'axe horizontal 13 autour duquel peut pivoter son bras support 11. Ainsi, selon le sens de rotation communiqué aux bras support 11, les roulettes 8, 9, viennent s'effacer dans l'assise 3 du réservoir 1 de manière à se situer à un niveau supérieur au chant inférieur 6 du rebord annulaire 4 ou, au contraire, sont limitées en rotation, par l'intermédiaire de moyens butée 14 appropriés, dans une position dans laquelle ces roulettes 8, 9 se situent en deçà du niveau 15 de l'assise 3.

Tel que précisé plus haut, les moyens de roulement 7 comportent, préférentiellement, au moins deux roulettes 8, 9. Avantageusement, elles sont montées en rotation sur des bras supports 11 pivotant autour d'un même axe horizontal 13. De plus, une traverse 16 est reliée, à ces extrémités, auxdits bras supports 11. La commande en basculement d'avant en arrière autour de l'axe horizontal 13 de ces bras supports 11 s'exécute simultanément.

Tel que représenté dans les figures 1 et 2, en position rétractée B, les roulettes 8, 9 viennent se positionner dans des échancrures 17, 18 usinées dans le rebord annulaire 4 et, d'une façon générale, dans l'assise 3. Des évidements complémentaires 20, 21, présents au niveau de cette assise 3 permettent, en outre, de recevoir les bras supports 11 et la traverse 16.

Contrairement, en position sortie A, obtenue après basculement des roulettes 8, 9 autour de l'axe horizontal 13, la traverse 16 vient se positionner dans une rainure 22 usinée dans l'assise 3 tout en empêchant aux roulettes 8, 9 de basculer davantage. En quelque sorte, cette traverse 16 constitue les moyens butée 14 assurant le maintien desdites roulettes 8, 9 à un niveau inférieur à celui 15 de l'assise 3.

Il est évident qu'un tel réservoir 1 peut être équipé davantage de roulettes 8, 9 regroupées, par exemple, par paire de la même manière à ce qui est décrit ci-dessus.

De même, il peut être avantageux d'équiper le réservoir 1 de moyens de blocage des roulettes 8, 9 dans leur position rétractée B et/ou dans leur position sortie A. Ainsi, à titre d'exemple, dans leur position rétractée B, ces roulettes 8, 9 et leurs bras supports 11 respectifs peuvent venir se bloquer au travers d'un ajustage serré, dans les échancrures 17, 18, éventuellement, dans les évidements complémentaires 20, 21. Ces moyens de blocage sont de nature déverrouillable.

Bien entendu, d'autres types de moyens de blocage de ces roulettes 8, 9 dans leur position rétractée B peuvent être envisagés, tels que des moyens susceptibles d'être commandés par l'usager extérieurement au réservoir 1.

A titre d'exemple, un téton de verrouillage à rappel élastique en position de blocage peut, en coopérant, simultanément, avec les moyens de roulement 7 et l'assise 3, immobiliser les roulettes 8, 9, dans cette position rétractée B. Il suffit, à ce moment là, à l'usager d'intervenir sur ce téton de verrouillage afin de le repousser dans une position effacée, autorisant la libre rotation des bras supports 11 autour de l'axe 13.

En fait, de tels moyens de blocage peuvent également être utilisés pour immobiliser les moyens de roulement 7 dans leur position sortie A. Il est d'ailleurs illustré en traits discontinus, dans la figure 2, un évidement 23 usiné dans la paroi du réservoir 1 permettant d'accueillir de tels moyens de blocage du type téton de verrouillage.

L'on se reporte, à présent, aux figures 3 à 5 illustrant un second mode de réalisation de ces moyens de roulement 7 de nature rétractable. Ce mode de réalisation se distingue de celui précédemment décrit en ce que les bras supports 11 sont pivotants autour d'un axe horizontal 13A qui est perpendiculaire à l'axe de rotation des roulettes 8A, 9A. Ainsi, la solution des figures 1 et 2 s'approche davantage à un basculement d'avant en arrière des roulettes 8, 9, tandis que le cas des figures 3 à 5 est similaire à celui d'un train d'atterrissage d'un avion dans la mesure où les roulettes 8A, 9A et leurs bras supports 11A, se rabattent sous le réservoir 1, en direction de la partie centrale 24 de ce dernier.

Là encore, il est représenté des moyens de roulement rétractables 7 composés de deux roulettes 8A, 9A, et de leurs bras supports 11A. En fait, ces roulettes 8A, 9A sont réparties, préférentiellement, de manière diamétralement opposée sous l'assise 3 du réservoir 1. Plus précisément, le rebord annulaire 4, constituant cette assise 3, présente des échancrures 17A, 18A lesquelles permettent d'accueillir les moyens d'articulation 25 reliant l'extrémité 12A des bras supports 11A au réservoir 1. De plus, la présence de ce rebord annulaire 4 permet de définir, sous le réservoir 1, un logement 26 à l'intérieur duquel peuvent s'effacer les roulettes 8A, 9A, ceci en position rétractée B.

La figure 5 illustre, dans une demi vue, la position sortie A et dans l'autre demi vue, la position rétractée B des moyens de roulement rétractables 7.

Il convient d'observer que, là encore, à ces moyens de roulement rétractables 7 sont associés des moyens butée 14 limitant l'angle de pivotement des bras supports 11A autour de l'axe horizontal 13A, ceci partant de la position rétractée B, de sorte qu'en position sortie A, les roulettes 8A, 9A coopèrent, effectivement, avec le sol sans qu'elles ne se rabattent vers l'extérieur ou l'intérieur sous le poids du réservoir 1. D'ailleurs, celui-ci est équipé avantageusement, de moyens de blocage de ces moyens de roulement rétractables 7 en position sortie A et, éventuellement, aussi en position rétractée B.

Ces moyens de blocage peuvent être de configuration analogue à ceux décrits ci-dessus à propos du mode de réalisation correspondant aux figures 1 et 2.

Cependant, ils peuvent également, dépendre de moyens de commande à distance 27 à même d'équiper le réservoir 1 et ayant pour but de faciliter à un usager la commande de sortie et de retrait des moyens de roulement rétractables 7. Ainsi, de tels moyens de commande à distance 27, tels que visibles dans les figures 6 et 7, peuvent comporter un organe de commande 28 placé de manière aisément accessible dans la partie supérieure 29 du réservoir 1.

Ces moyens de commande à distance 27 comportent, en outre, des moyens de transmission 30 reliés à cet organe de commande 28 et placés le long du réservoir 1 pour agir sur les moyens de roulement rétractables 7 de sorte que, selon la manoeuvre communiquée à l'organe de commande 28, lesdits moyens de roulement 7, sortent ou reprennent leur position rétractée B.

Dans le cadre des dessins ci-joints, il est illustré une application de ces moyens de commande à distance 27 au mode de réalisation plus particulièrement représenté dans les figures 3 à 5. Ainsi, l'organe de commande 28 se présente sous forme d'un levier 31 rendu solidaire, par l'intermédiaire de moyens d'articulation 32, de ladite partie supérieure 29 du réservoir 1.

Lors de la commande en rotation de ce levier 31, celui-ci agit sur les moyens de transmission 30 par l'intermédiaire de moyens d'entraînement 33 du type poulie ou roue dentée 34. Plus précisément, à cette poulie ou roue dentée 34, est rendue solidaire l'une des extrémités 35 des moyens de transmission 30 du type câble, chaîne ou analogue 36. En fait, ce câble ou cette chaîne 36 s'étend le long du réservoir 1 avant de rejoindre la partie inférieure 2 de ce dernier, par exemple, au-delà d'une poulie de renvoi placée de manière appropriée au niveau de l'assise 3. Ce câble ou cette chaîne 36 se dédouble, ensuite, en autant de brins 37, 37A que de roulettes indépendantes 8A, 9A. Chacun de ces brins 37, 37A, rejoint à son extrémité 38, une poulie ou un pignon 39, 39A dont il est rendu solidaire. Cette poulie ou ce pignon 39, 39A est disposé sur l'axe de rotation 13A d'un bras support 11A et rendu solidaire en rotation de ce dernier.

Ainsi, en exerçant, par l'intermédiaire du levier 31 une traction sur les moyens de transmission 30, ceux-ci provoquent la rotation des poulies ou pignons 39, 39A et donc le pivotement des bras supports 11A. Les roulettes 8A, 9A gagnent, ainsi, leur position sortie A. Contrairement, en relâchant cette traction, les roulettes 8A, 9A regagnent leur position rétractée B. A ce propos, les bras supports 11A des roulettes 8A, 9A, peuvent être soumis à des moyens de rappel élastique en position repliée sous le réservoir 1.

Tel qu'indiqué ci-dessus, les moyens de blocage en position sortie A des moyens de roulement 7 peuvent être dépendants de ces moyens de commande à distance 27. Ainsi, ces moyens de blocage peuvent être associés à l'organe de commande 28 de sorte qu'après la sortie des roulettes 8A, 9A, le levier 31 est immobilisé en rotation, tout en maintenant la traction au niveau des moyens de transmission 30.

La figure 6 illustre un mode de réalisation tout particulier desdits moyens de commande à distance 27 appliqués à une configuration de réservoirs 1 spécifiques. Plus précisément, ce réservoir 1 comporte, dans ces conditions, un rebord annulaire 40 s'étendant au-dessus de sa partie supérieure 29. Sur ce rebord annulaire 40 est monté en rotation le levier 31 autour d'un axe horizontal 41 ceci par l'intermédiaire de moyens d'articulation 32 appropriés. Dans ce cas particulier, le levier 31 et donc l'organe de commande 28 empruntent la forme d'un anneau s'inscrivant, sensiblement, à l'intérieur du rebord annulaire 40. Ainsi, en soulevant ce levier 31, il entraîne en rotation la poulie 34 dont l'axe est confondu avec l'axe horizontal 41. Il s'en suit une traction sur le câble ou la chaîne 36, traction répercutée, par l'intermédiaire des brins 37, 37A, sur les poulies 39, 39A dont la rotation provoque le déploiement des bras supports 11A amenant les moyens de roulement 7 dans leur position sortie A. En fait, une fois cette position atteinte, le levier 31 est immobilisé par l'intermédiaire de moyens de blocage 42 se présentant, dans ce cas, sous forme d'un loquet à rappel élastique avec lequel vient à coopérer une languette 43 rendue solidaire du levier 31. Plus précisément, lorsque le levier 31 est soulevé dans sa position repérée en traits discontinus C, ladite languette 43 s'engage sous le loquet, immobilisant, ainsi, ledit levier 31. Un poussoir 44 permet, ensuite, à l'usager de libérer la languette 43 du loquet et de rabattre, à nouveau, le levier 31 sur le réservoir 1 conduisant les moyens de roulement 7 à se rétracter.

De manière à éviter une manoeuvre inopportune en tentant de soulever le réservoir 1, le levier 31 peut également être immobilisé par des moyens de verrouillage 45 dans sa position repliée, c'est-à-dire la position correspondant à l'effacement des roulettes 8A, 9A sous le réservoir 1.

Tel que représenté dans la figure 6, ces moyens de verrouillage 45 peuvent emprunter une configuration analogue aux moyens de blocage 42 c'est-à-dire sous forme d'un loquet monté sur le réservoir 1 et à même de coopérer avec ledit levier 31. Là encore, un bouton poussoir 46 permet à l'usager de dégager le levier 31 de ce loquet.

Il est intéressant d'observer qu'un réservoir 1, conforme à l'invention, peut être équipé de moyens de préhension à bras de levier 47 de nature escamotable empruntant une configuration sensiblement analogue à l'organe de commande 28. En fait, de tels moyens de préhension à bras de levier 47, montés pivotants sur le réservoir 1, préférentiellement sur sa partie supérieure 29, facilite considérablement les manipulations de ce réservoir 1. Plus précisément, grâce au bras de levier qu'ils procurent, l'usager peut basculer, avec facilité, le réservoir 1 pour, dans un premier temps, sortir les moyens de roulement 7 et, dans un deuxième temps, pour ramener le poids du réservoir 1 sur ces derniers. En définitive, les moyens de préhension à bras de levier 47 permettent de déplacer ce réservoir 1 avec aisance de manière analogue à un caddie à provisions.

Il convient de noter que s'il est avantageux, dans le cas de moyens de commande à distance 27, que l'organe de commande 28 remplit les fonctions de tels moyens de préhension à bras de levier 47, l'un et l'autre peuvent également être dissociés. A titre d'exemple, l'organe de commande 28 peut être implanté sur la paroi du réservoir 1, tout comme, d'ailleurs, les moyens de préhension à bras de levier 47. Finalement, il convient de noter que la présence du rebord annulaire 40 équipant la partie supérieure 29 du réservoir 1 n'est pas indispensable pour la liaison de l'organe de commande 28 ou encore des moyens de préhension à bras de levier 47 audit réservoir 1. En effet, cette liaison peut, évidemment, être obtenue par tout autre moyen du type patte de fixation, palier ou analogue.

De même, dans le cadre de la figure 6 il est illustré des moyens de transmission 30, du type câble ou chaîne 36 s'étendant à l'intérieur d'une cavité 48 présente dans l'épaisseur de la paroi du réservoir 1 ou dans l'habillage, par exemple, en matière synthétique, entourant ce dernier. Toutefois, d'autres solutions peuvent être envisagées pour conduire ces moyens de transmission 30 à la partie inférieure 2 du réservoir 1.

Les avantages obtenus grâce à cette invention sont, indéniablement, une facilité de transport et de manipulation de réservoir 1 du type bouteille à gaz. En effet, grâce aux moyens de roulement rétractables 7 in situ, l'usager n'a pas besoin de soulever le réservoir 1 et il peut également s'affranchir de moyens de transport auxiliaires du type caddie, chariot ou analogue.

Finalement, grâce aux moyens de commande à distance, le retrait ou la sortie de ces moyens de roulement 7 s'effectue avec une grande aisance, tout comme le déplacement ultérieur, tout particulièrement avec l'assistance de moyens de préhension à bras de levier.

## Revendications

1. Réservoir (1), en particulier, une bouteille à gaz, comprenant, dans sa partie inférieure (2), une assise (3) autorisant son maintien en position stable au sol, caractérisé par le fait qu'il comporte, au niveau de cette assise (3) des moyens de roulement rétractables (7) qui, en position sortie A, facilitent le déplacement dudit réservoir (1) et, en position rétractée B, permettent à nouveau à ce dernier de reposer au sol de manière stable par l'intermédiaire de ladite assise (3).

2. Réservoir selon la revendication 1, caractérisé par le fait que les moyens de roulement rétractables (7) se présentent sous forme d'au moins une roulette (8, 9 ; 8A, 9A) montée en rotation sur l'extrémité (10) d'un bras support (11 ; 11A) lui-même monté pivotant, à son extrémité opposée (12), sur la partie inférieure (2) du réservoir (1) de sorte qu'en position rétractée B les roulettes (8, 9 ; 8A, 9A) viennent s'effacer dans l'assise (3) du réservoir (1) et qu'en position sortie A lesdites roulettes (8, 9 ; 8A, 9A) se situent en-deçà du niveau (15) de l'assise (3).

3. Réservoir selon la revendication 2, caractérisé par le fait que l'axe de rotation des roulettes (8, 9) est parallèle à l'axe horizontal (13) autour duquel pivote le bras support (11) pour atteindre la position sortie A ou la position rétractée B.

4. Réservoir selon la revendication 3, caractérisé par le fait que les moyens de roulement rétractables (7) comportent au moins une paire de roulettes (8, 9) dont les bras supports (11) sont rendus solidaires par l'intermédiaire d'une traverse (16) autorisant un pivotement simultané desdits bras supports (11) autour d'un même axe de rotation horizontal (13).

5. Réservoir selon la revendication 2, caractérisé par le fait que l'axe de rotation d'une roulette (8A, 9A) est perpendiculaire à l'axe de rotation horizontal (13A) autour duquel pivote son bras support (11A) par rapport à la partie inférieure (2) du réservoir (1).

6. Réservoir selon la revendication 5, caractérisé par le fait que les moyens de roulement rétractables (7) comportent au moins deux roulettes (8A, 9A) disposées de manière diamétralement opposée au niveau de la partie inférieure (2) du réservoir (1) et à même de se rabattre, par pivotement de leur bras support (11A) autour de l'axe de rotation horizontal (13A) en direction de la partie centrale (24) dudit réservoir (1).

7. Réservoir selon l'une quelconque des revendications 3 et 4, caractérisé par le fait que l'assise (3) est définie par un rebord annulaire comportant des échancrures (17, 18) et des évidements complémentaires (20, 21) à même d'accueillir les roulettes (8, 9) et leurs bras supports (11) respectifs en position rétractée B.

8. Réservoir selon l'une quelconque des revendications 5 et 6, caractérisé par le fait que l'assise (3) est définie par un rebord annulaire (4) comportant des échancrures (17, 18) permettant d'accueillir les moyens d'articulation (32) reliant les bras supports (11A) audit réservoir (1), ce rebord annulaire (4), définissant sous le réservoir (1), un logement à l'intérieur duquel viennent se positionner les roulettes (8A, 9A) et leurs bras supports (11A) en position rétractée B.

9. Réservoir selon l'une quelconque des revendications 2 à 8, caractérisé par le fait qu'il comporte des moyens butée (14) limitant la rotation des bras suppports (11 ; 11A) par rapport à leur axe de rotation horizontal (13 ; 13A) lors de la commande de sortie des roulettes (8, 9 ; 8A, 9A) pour immobiliser, celles-ci lorsqu'elles se situent en deçà du niveau (15) de l'assise (3).

10. Réservoir selon l'une quelconque des revendications 2 à 9, caractérisé par le fait qu'il comporte des moyens de blocage de nature déverrouillable pour bloquer les roulettes (8, 9 ; 8A, 9A) dans leur position rétractée B et/ou dans leur position sortie A.

11. Réservoir selon l'une quelconque des revendications précédentes, caractérisé par le fait qu'il comporte des moyens de commande à distance (27) pour assurer la commande de sortie et de retrait des moyens de roulement rétractables (7).

12. Réservoir selon la revendication 11, caractérisé par le fait que les moyens de commande à distance (27) comportent un organe de commande (28), tel qu'un levier (31), monté par l'intermédiaire de moyens d'articulation (32) sur le réservoir (1), cet organe de commande (28) étant à même d'agir sur des moyens de transmission (30), du type câble ou chaîne (36), par l'intermédiaire de moyens d'entraînement (33), tels qu'une poulie ou une roue dentée (34), lesdits moyens de transmission (30) coopérant avec les moyens de roulement rétractables (7) pour les amener, selon le sens de l'action sur l'organe de commande (28), en position sortie A ou en position rétractée B.

13. Réservoir selon la revendication 12, caractérisé par le fait qu'au niveau de la partie inférieure (2) du réservoir (1), les moyens de transmission (30), du type câble ou chaîne (36), sont dédoublés en autant de brins (37, 37A) que de roulettes indépendantes (8A, 9A) ou de paire de roulettes (8, 9), ces brins (37, 37A) étant rendus solidaires d'une poulie ou d'un pignon (39, 39A) disposé sur l'axe de rotation (13, 13A) d'un bras support (11, 11A) et rendu solidaire en rotation de ce dernier.

14. Réservoir selon la revendication 11, caractérisé par le fait qu'il comporte des moyens de blocage de l'organe de commande (28) dans sa position correspondant à la sortie et/ou au retrait des roulettes (8, 9 ; 8A, 9A).

15. Réservoir selon la revendication 14, caractérisé par le fait que les moyens de blocage de l'organe de commande (28) constituent, en outre, les moyens pour bloquer les roulettes (8, 9 ; 8A, 9A) dans leur position sortie A et/ou dans leur position rétractée B.

16. Réservoir selon l'une quelconque des revendications précédentes, caractérisé par le fait qu'il comporte des moyens de préhension à bras de levier (47), de nature escamotable.

17. Réservoir selon les revendications 12 et 16, caractérisé par le fait que les moyens de préhension à bras de levier (47) sont constitués, substantiellement, par l'organe de commande (28) des moyens de commande à distance (27).

## Patentansprüche

1. Behälter (1), insbesondere Gasflasche, umfassende, in seinem unteren Teil (2), eine Basis (3), die es erlaubt, ihn in einer stabilen Stellung auf dem Boden zu halten, dadurch gekennzeichnet, daß er im Bereich dieser Basis (3) einziehbare Rollmittel (7) umfaßt, die in der ausgefahrenen Stellung A die Verstellung des genannten Behälters (1) erleichtern und es diesem in der eingezogenen Stellung B aufneu ermöglichen, über die genannte Basis (3) stabil auf dem Boden zu ruhen.

2. Behälter nach Anspruch 1, dadurch gekennzeichnet, daß die einziehbaren Rollmittel (7) als wenigstens eine Rolle (8, 9; 8A, 9A) ausgestaltet sind, die drehbar am Ende (10) eines Tragarms (11; 11A) montiert ist, der, seinerseits, an seinem gegenüberliegenden Ende (12) so schwenkbar am unteren Teil (2) des Behälters (1) montiert ist, daß sich die Rollen (8, 9; 8A, 9A) in der eingezogenen Stellung B in die Basis (3) des Behälters zurückziehen und sich die genannten Rollen (8, 9; 8A, 9A) in der ausgefahrenen Stellung A unterhalb der Höhe (15) der Basis (3) befinden.

3. Behälter nach Anspruch 2, dadurch gekennzeichnet, daß die Drehachse der Rollen (8, 9; 8A, 9A) parallel zur waagerechten Achse (13) verläuft, um die der Tragarm (11) schwenkt, um in die ausgefahrene Stellung A oder die eingezogene Stellung B zu gelangen.

4. Behälter nach Anspruch 3, dadurch gekennzeichnet, daß die einziehbaren Rollmittel (7) wenigstens ein Rollenpaar (8, 9) umfaßt, dessen Tragarme (11) über eine Querstange (16), die eine gleichzeitige Schwenkung der genannten Tragarme (11) um eine und diegleiche waagerechte Drehachse (13) erlauben, fest miteinander verbunden sind.

5. Behälter nach Anspruch 2, dadurch gekennzeichnet, daß die Drehachse einer Rolle (8A, 9A) senkrecht zur waagerechten Drehachse (13A) verläuft, um die deren Tragarm (11A) bezüglich des unteren Teils (2) des Behälters (1) schwenkt.

6. Behälter nach Anspruch 5, dadurch gekennzeichnet, daß die einziehbaren Rollmittel (7) wenigstens zwei Rollen (8A, 9A) umfassen, die im Bereich des unteren Teils (2) des Behälters (1) diametral gegenüberliegend angeordnet und geeignet sind, durch Schwenkung ihres Tragarms (11A) um die waagerechte Drehachse (13A) in Richtung des zentralen Teils (24) des Behälters (1) zurückzuklappen.

7. Behälter nach irgendeinem der Ansprüche 3 und 4, dadurch gekennzeichnet, daß die Basis (3) von einem ringförmigen, hochstehenden Rand definiert ist, der Ausschnitte (17, 18) und ergänzende Aussparungen (20, 21) umfaßt, die geeignet sind, die Rollen (8, 9) und deren jeweilige Tragarme (11) in der eingezogenen Stellung B aufzunehmen.

8. Behälter nach irgendeinem der Ansprüche 5 und 6, dadurch gekennzeichnet, daß die Basis (3) von einem ringförmigen, hochstehenden Rand (4) definiert ist, die Ausschnitte (17, 18) umfaßt, die es erlauben, die Gelenkverbindungsmittel (32) aufzunehmen, die die Tragarme (11A) mit dem genannten Behälter (1) verbinden, wobei dieser ringförmige, hochstehende Rand (4) unterhalb des Behälters (1) einen Hohlraum definiert, in den sich die Rollen (8A, 9A) und deren Tragarme (11) in der eingezogenen Stellung B positionieren.

9. Behälter nach irgendeinem der Ansprüche 2 bis 8, dadurch gekennzeichnet, daß er Anstoßmittel (14) umfaßt, die die Drehung der Tragarme (11; 11A) bezüglich deren waagerechten Drehachse (13; 13A) während der Steuerung des Ausfahrens der Rollen (8, 9; 8A, 9A) beschränken, um diese unbeweglich zu machen, wenn sie sich unterhalb der Höhe (15) der Basis (3) befinden.

10. Behälter nach irgendeinem der Ansprüche 2 bis 9, dadurch gekennzeichnet, daß er Sperrmittel entriegelbarer Art umfaßt, um die Rollen (8, 9; 8A, 9A) in deren eingezogenen Stellung B und/oder in der ausgefahrenen Stellung A zu sperren.

11. Behälter nach irgendeinem der vorgehenden Ansprüche, dadurch gekennzeichnet, daß er Fernbedienungsmittel (27) umfaßt, um die Steuerung des Ausfahrens und des Zurückziehens der einziehbaren Rollmittel (7) zu sichern.

12. Behälter nach Anspruch 11, dadurch gekennzeichnet, daß die Fernbedienungsmittel (27) ein Steuerorgan (28), wie einen Hebel (31), umfassen, das über Gelenkverbindungsmittel (32) am Behälter (1) montiert ist, wobei dieses Steuerorgan (28) geeignet ist, über Antriebsmittel (33), wie eine Rolle oder ein Zahnrad (34), Treibmittel (30), wie ein Kabel oder eine Kette (36), zu betätigen, wobei die genannten Treibmittel (30) mit den einziehbaren Rollmitteln (7) zusammenwirken, um diese je nach der Betätigungsrichtung des Steuerorgans (28) in die ausgefahrene Stellung A oder in die eingezogene Stellung B zu bringen.

13. Behälter nach Anspruch 12, dadurch gekennzeichnet, daß die Treibmittel (30), wie ein Kabel oder eine Kette (36), im Bereich des unteren Teils (2) des Behälters (1) in ebensoviel Trume (37, 37A) untergeteilt sind als es unabhängige Rollen (8A, 9A) oder Rollenpaare (8, 9) gibt, wobei diese Trume fest mit einer Rolle oder einem Zahnrad (39, 39A) verbunden sind, die/der auf der Drehachse (13, 13A) eines Tragarms (11, 11A) angeordnet und drehfest mit diesem letzten verbunden ist.

14. Behälter nach Anspruch 11, dadurch gekennzeichnet, daß er Mittel umfaßt, um das Steuerorgan (28) in seiner dem Ausfahren und/oder dem Zurückziehen der Rollen (8, 9; 8A, 9A) entsprechenden Stellung zu sperren.

15. Behälter nach Anspruch 14, dadurch gekennzeichnet, daß die Mittel zum Sperren des Steuerorgans (28) außerdem die Mittel bilden, um die Rollen (8, 9; 8A, 9A) in deren ausgefahrenen Stellung A und/oder in deren eingezogenen Stellung B zu sperren.

16. Behälter nach irgendeinem der vorgehenden Ansprüche, dadurch gekennzeichnet, daß er Greifmittel mit einem Hebelarm (47) einziehbarer Art umfaßt.

17. Behälter nach Ansprüchen 12 und 16, dadurch gekennzeichnet, daß die Greifmittel mit einem Hebelarm (47) im wesentlichen vom Steuerorgan (28) der Fernbedienungsmittel (27) gebildet werden.

## Claims

1. Container (1), in particular a gas bottle, comprising, in its lower portion (2), a base (3) allowing to maintain same in a stable position on the floor, characterized in that it includes, at the level of this base (3), withdrawable rolling means (7) which, in the protruding position A, facilitate the change of location of said container (1) and, in the withdrawn position B, allow this latter again to stably rest on the floor by means of said base (3).

2. Container according to claim 1, characterized in that the withdrawable rolling means (7) are in the shape of at least one castor (8, 9; 8A, 9A) rotationally mounted onto the end (10) of a bracket (11; 11A) which is, in turn, pivotingly mounted, at its opposite end (12), onto the lower portion (2) of the container (1), so that, in the withdrawn position B, the castors (8, 9; 8A, 9A) withdraw into the base (3) of the container and, in the protruding position A, said castors (8, 9; 8A, 9A) are located below the level (15) of the base (3).

3. Container according to claim 2, characterized in that the axis of rotation of the castors (8, 9; 8A, 9A) is parallel to the horizontal axis (13) about which pivots the bracket (11) to reach the protruding position A or the withdrawn position B.

4. Container according to claim 3, characterized in that the withdrawable rolling means (7) include at least a pair of castors (8, 9) the brackets (11) of which are made integral through a cross-bar (16) authorizing a simultaneous pivoting of said brackets (11) about one and the same horizontal axis of rotation (13).

5. Container according to claim 2, characterized in that the axis of rotation of a castor (8A, 9A) is perpendicular to the horizontal axis of rotation (13A) about which pivots its bracket (11A) with respect to the lower portion (2) of the container (1).

6. Container according to claim 5, characterized in that the withdrawable rolling means (7) include at least two castors (8A, 9A) arranged diametrically opposite to each other at the level of the lower portion (2) of the container (1) and capable of swinging back, through the pivotment of their bracket (11A) about the horizontal axis of rotation (13A), in the direction of the central portion (24) of said container (1).

7. Container according to any of claims 3 and 4, characterized in that the base (3) is defined by an annular rim including cut-outs (17, 18) and complementary recesses (20, 21) capable of accomodating the castors (8, 9) and their respective brackets (11) in the withdrawn position B.

8. Container according to any of claims 5 and 6, characterized in that the base (3) is defined by an annular rim (4) including cut-outs (17, 18) allowing to accomodate the hinging means (32) connecting the brackets (11A) to said container (1), this annular rim (4) defining, under the container (1), a recess inside which the castors (8A, 9A) and their brackets (11) position themselves in the withdrawn position B.

9. Container according to any of claims 2 to 8, characterized in that it includes stopping means (14) limiting the rotation of the brackets (11; 11A) with respect to their horizontal axis of rotation (13; 13A) when controlling the protrusion of the castors (8, 9; 8A, 9A), in order to immobilize same when they are located below the level (15) of the base (3).

10. Container according to any of claims 2 to 9, characterized in that it includes locking means of an unlockable kind in order to lock the castors (8, 9; 8A, 9A) in their withdrawn position B and/or in their protruding position A.

11. Container according to any of the preceding claims, characterized in that it includes remote-control means (27) to ensure the control in protrusion and in withdrawal of the withdrawable rolling means (7).

12. Container according to claim 11, characterized in that the remote-control means (27) include a control organ (28), such as a lever (31), mounted, through hinging means (32), onto the container (1), this control organ (28) being capable of acting on transmission means (30), such as a cable or a chain (36), through driving means (33), such as a pulley or a toothed wheel (34), said transmission means (30) co-operating with the withdrawable rolling means (7) to bring same, according to the direction of the action on the control organ (28), into the protruding position A or into the withdrawn position B.

13. Container according to claim 12, characterized in that, at the level of the lower portion (2) of the container (1), the transmission means (30), such as a cable or a chain (36), are divided into as many strands (37, 37A) as there are independent castors (8A, 9A) or pairs of castors (8, 9), these strands being made integral with a pulley or a toothed wheel (39, 39A) arranged on the axis of rotation (13, 13A) of a bracket (11, 11A) and made rotationally integral with this latter.

14. Container according to claim 11, characterized in that it includes means for locking the control organ (28) in its position corresponding to the protrusion and/or the withdrawal of the castors (8, 9; 8A, 9A).

15. Container according to claim 14, characterized in that the means for locking the control organ (28) in addition form the means for locking the castors (8, 9; 8A, 9A) in their protruding position A and/or in their withdrawn position B.

16. Container according to any of the preceding claims, characterized in that it includes gripping means with a lever arm (47) of a withdrawable kind.

17. Container according to claims 12 and 16, characterized in that the gripping means with a lever arm (47) are substantially formed by the control organ (28) of the remote-control means (27).
